# EUROPEAN PATENT APPLICATION

(11) **EP 2 031 892 A1**
(43) Date of publication of application: **04.03.2009**
(21) Application number: 07745313.2
(22) Date of filing: 14.06.2007
(51) Int. Cl.: H04Q 7/38, H04J 1/00, H04J 11/00

(54) **BASE STATION DEVICE**

(30) Priority: 19.06.2006 JP 2006169454
(71) Applicant: NTT DoCoMo, Inc., Chiyoda-ku Tokyo 100-6150 (JP)
(72) Inventor: TANNO, Motohiro, Chiyoda-ku, Tokyo 100-6150 (JP); KISHIYAMA, Yoshihisa, Chiyoda-ku, Tokyo 100-6150 (JP); HIGUCHI, Kenichi, Chiyoda-ku, Tokyo 100-6150 (JP); SAWAHASHI, Mamoru, Chiyoda-ku, Tokyo 100-6150 (JP)
(74) Representative: HOFFMANN EITLE
(86) International application number: PCT/JP2007/062056
(87) International publication number: WO 2007/148612

(57) **Abstract**

A base station communicating with mobile stations by using a frequency band within a transmission band based on orthogonal frequency division multiplexing is disclosed. The base station includes a multiplexing unit configured to multiplex a synchronization channel, for a mobile station performing an initial cell search, in a second frequency band including a center frequency on a raster of a first frequency band and having a bandwidth corresponding to the smallest one of receivable bandwidths of the mobile stations in a system. The multiplexing unit is configured to multiplex multiple synchronization channels, for a mobile station performing a neighboring cell search, in a third frequency band including the center frequency on the raster of the first frequency band and having a bandwidth that is greater than that of the second frequency band.

## Description

### TECHNICAL FIELD

The present invention generally relates to a base station that generates a synchronization channel.

### BACKGROUND ART

In wideband code division multiple access (W-CDMA), each mobile station performs a cell search using a downlink physical channel called a synchronization channel (SCH). There are two types of synchronization channels: a primary SCH (P-SCH) and a secondary SCH (S-SCH) (see, for example, "W-CDMA mobile communication system", Editor: Keiji Tachikawa, Fourth Printing, March 15, 2002, page 112).

The P-SCH is used by the mobile station to detect a slot timing. The S-SCH is used by the mobile station to detect a frame timing and a scrambling code group. These two synchronization channels enable fast cell searches in W-CDMA.

The P-SCH and the S-SCH are code-multiplexed in the time domain and the multiplexed channel is transmitted to the mobile station. The mobile station despreads the multiplexed channel and thereby separates the P-SCH and the S-SCH. Because the P-SCH and the S-SCH are code-multiplexed and transmitted at the same timing, they under go the same channel fading. Therefore, it is possible to use a detected P-SCH as a reference signal (pilot signal) for correlation detection of an S-SCH and thereby to perform synchronous detection of the S-SCH. This in turn makes it possible to accurately detect the

### DISCLOSURE OF INVENTION

### PROBLEMS TO BE SOLVED BY THE INVENTION

However, the above background art technologies have problems as described below.

In next-generation radio access systems, orthogonal frequency division multiplexing (OFDM), which is more resistant to multipath fading, is to be used.

In such a radio access system, a wide band (e.g., 20 MHz) and a part of the wide band (e.g., 5 MHz) are selectively used depending on, for example, configurations and applications of mobile stations and base stations so that various operators can provide various services.

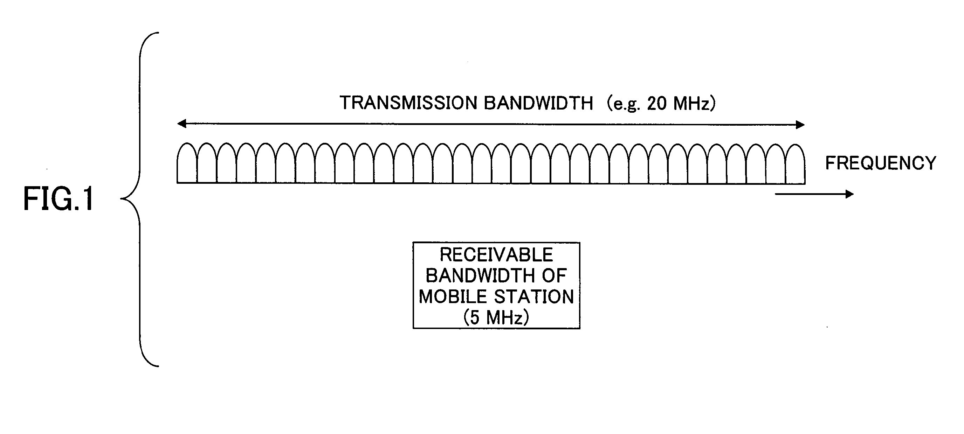

FIG. 1 shows a frequency spectrum of an exemplary OFDM wireless communication system using multiple frequency bands with different bandwidths. The OFDM wireless communication system uses a transmission bandwidth of 20 MHz, and communications are performed using either the entire transmission bandwidth of 20 MHz or a part of the transmission bandwidth, for example, 5 MHz.

Assume that the wireless communication system includes a mobile station with a receivable bandwidth narrower than the transmission bandwidth of a base station. For example, if the receivable bandwidth of the mobile station is 5 MHz, the mobile station communicates with the base station using a frequency band of 5 MHz that includes the center frequency of the 20 MHz bandwidth.

Meanwhile, in an OFDM-modulated signal, various subcarrier signals are combined in the time domain. In this case, a mobile station is preferably configured to be able to quickly and easily detect a synchronization channel even when a signal is composed of various subcarrier signals. Particularly, to lengthen the battery life of a mobile station, it is important to reduce the workload of the mobile station in detecting a synchronization channel during a cell search.

There are three types of cell searches: an initial cell search, a cell search during communication, and a cell search during standby mode. An initial cell search is performed when a mobile station is turned on. A cell search during standby mode is performed by a mobile station in the standby mode to search for the next cell when the mobile station moves to the edge of a serving cell from which it is receiving a broadcast channel. A cell search during communication is performed by a mobile station to search for the next cell when the mobile station moves to the edge of a serving cell during communications. The cell search during communication and the cell search during standby mode are also called neighboring cell searches.

When a mobile station is turned on, it does not know the system bandwidth of a base station covering the area where the mobile station is currently located. Therefore, the mobile station has to determine the bandwidth of a synchronization channel to perform an initial cell search.

Meanwhile, the base station transmits a downlink signal using a frequency band within the transmission band. For example, the base station transmits a synchronization channel using a frequency band including the center frequency on a raster of the transmission band and having a bandwidth corresponding to the smallest one of receivable bandwidths of all mobile stations.The mobile station receives the downlink signal, i.e., the synchronization channel sent from the base station. For example, the mobile station detects a frequency band of 1.25 MHz or wider (e.g., 1.25 MHz or 5 MHz) including the center frequency of the 20 MHz spectrum.

In the initial cell search, the received power of the synchronization channel is high because the channel is sent from a serving cell.

In the neighboring cell search, the mobile station in a serving cell searches neighboring cells for the next cell into which the mobile station is going to move. Therefore, the received power of synchronization channels received from the neighboring cells is lower than the received power of a synchronization channel received from the serving cell. In this case, the synchronization channel sent from the serving cell interferes with the synchronization channels sent from the neighboring cells and thereby increases the SNRs of the synchronization channels.

One object of the present invention is to solve or reduce one or more of the above problems and to provide a base station that makes it possible to reduce the workload of a mobile station in an initial cell search and to improve the reception quality of a synchronization channel used in a neighboring cell search.

### MEANS FOR SOLVING THE PROBLEMS

An aspect of the present invention provides a base station communicating with mobile stations by using a frequency band within a transmission band based on orthogonal frequency division multiplexing. The base station includes a multiplexing unit configured to multiplex a synchronization channel, for a mobile station performing an initial cell search, in a second frequency band including a center frequency on a raster of a first frequency band and having a bandwidth corresponding to the smallest one of receivable bandwidths of the mobile stations in a system, wherein the multiplexing unit is configured to multiplex multiple synchronization channels, for a mobile station performing a neighboring cell search, in a third frequency band including the center frequency on the raster of the first frequency band and having a bandwidth that is greater than that of the second frequency band.

This configuration enables a mobile station to perform a cell search based on an assumption that a synchronization channel is transmitted in a frequency band having a bandwidth corresponding to the smallest one (e.g., 1.25 MHz) of receivable bandwidths of mobile stations in a system, and thereby eliminates the need for the mobile station to determine the frequency band used for the synchronization channel. Also, with this configuration, a mobile station performing a neighboring cell search can improve channel reception quality by using multiple synchronization channels transmitted in the third frequency band having a bandwidth that is greater than that of the second frequency band.

### ADVANTAGEOUS EFFECT OF THE INVENTION

Embodiments of the present invention provide a base station that makes it possible to reduce the workload of a mobile station in an initial cell search and to improve the reception quality of a synchronization channel used in a neighboring cell search.

### BRIEF DESCRIPTION OF THE DRAWINGS

FIG. 1 is a drawing illustrating a frequency spectrum of an OFDM wireless communication system using multiple frequency bands with different bandwidths;
FIG. 2 is a drawing used to describe an initial cell search;
FIG. 3 is a drawing illustrating exemplary allocation of frequency bands to synchronization channels used for initial and neighboring cell searches;
FIG. 4 is a partial block diagram illustrating a base station according to an embodiment of the present invention;
FIG. 5 is a partial block diagram illustrating a synchronization channel generating unit according to an embodiment of the present invention; and

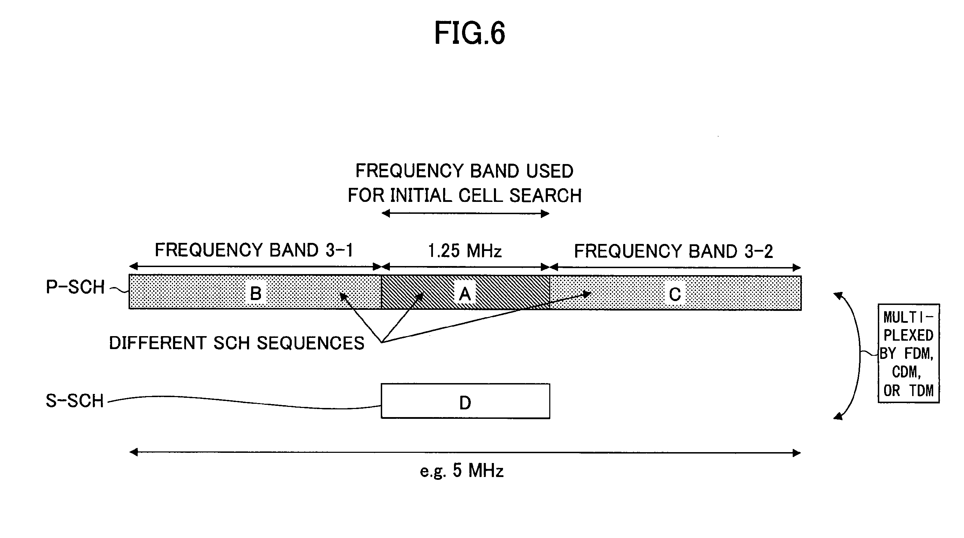

FIG. 6 is a drawing illustrating another exemplary allocation of frequency bands to synchronization channels used for initial and neighboring cell searches.

### EXPLANATION OF REFERENCES

- 100: Base station
- 200: Synchronization channel generating unit
- 300: Mobile station

### BEST MODE FOR CARRYING OUT THE INVENTION

The best mode for carrying out the invention is described based on the following embodiments with reference to the accompanying drawings.

Throughout the accompanying drawings, the same reference numbers are used for parts having the same functions, and overlapping descriptions of those parts are omitted.

A wireless communication system according to an embodiment of the present invention includes a base station and mobile stations.

The base station communicates with the mobile stations using a frequency band within a transmission band based on orthogonal frequency division multiplexing (OFDM).

In this embodiment, it is assumed that the base station uses a frequency band of 20 MHz and the mobile stations use a frequency band of 5 MHz. However, this embodiment may be applied to any case where mobile stations communicate using a part of a transmission band of a base station.

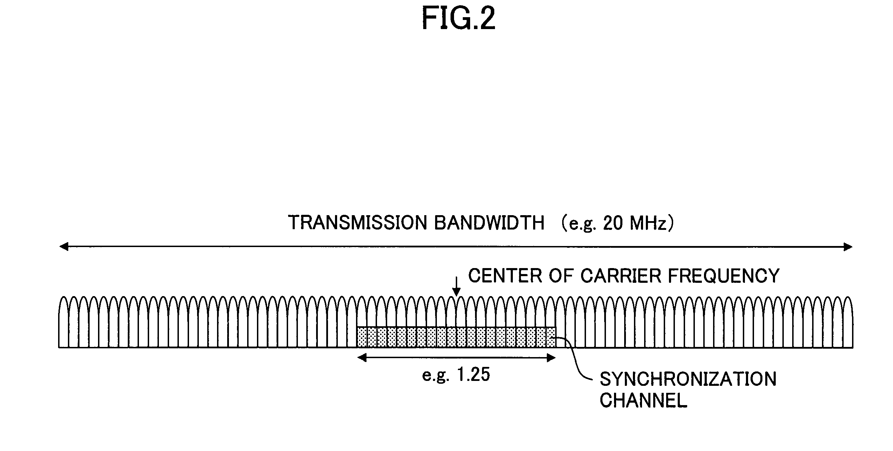

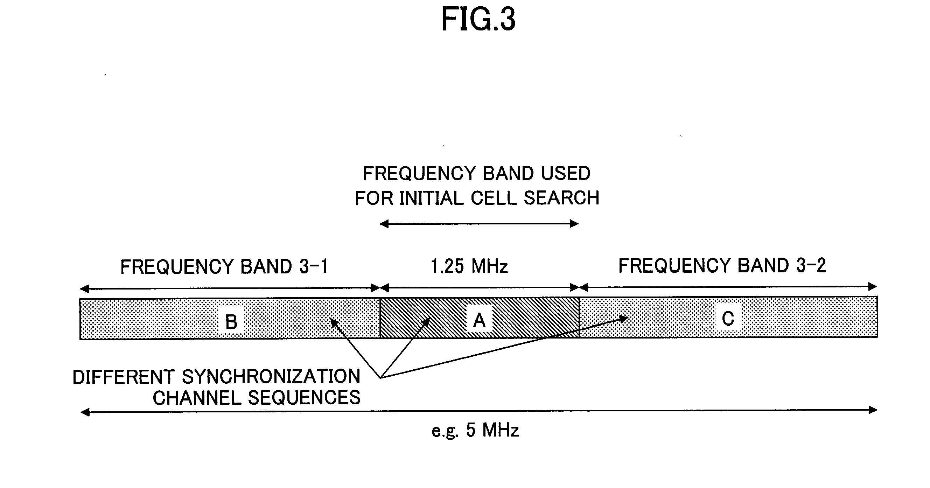

First, a method of performing an initial cell search is described with reference to FIGs. 2 and 3.

The base station and the mobile stations can communicate with each other using frequency bands with various bandwidths. In this embodiment, it is assumed that receivable bandwidths of the mobile stations are narrower than the transmission bandwidth of the base station. Also in this embodiment, a first frequency band indicates a frequency band having a first bandwidth corresponding to the transmission bandwidth of the base station and a second frequency band indicates a frequency band having a second bandwidth corresponding to the smallest receivable bandwidth, e.g., 1.25 MHz, of all mobile stations. Accordingly, the first bandwidth is greater than or equal to the second bandwidth. The second frequency band or the second bandwidth is used by the base station to transmit a synchronization channel. The second bandwidth may be predetermined by the system.

The mobile stations perform cell searches using synchronization channels (SCH). The base station transmits downlink signals or synchronization channels using frequency bands within the transmission band. For example, the base station transmits a synchronization channel for a mobile station performing an initial cell search by using the second frequency band including the center frequency on a raster of the first frequency band; and transmits synchronization channels for a mobile station performing a neighboring cell search by using a third frequency band including the center frequency on a raster of the first frequency band and having a bandwidth greater than the second bandwidth.

FIG. 3 shows exemplary allocation of frequency bands to synchronization channels. Frequency bands shown in FIG. 3 include the second frequency band of 1.25 MHz including the center frequency on a raster of the first frequency band, a frequency band 3-1 that is lower than the second frequency band, and a frequency band 3-2 that is higher than the second frequency band. Also in this example, a frequency band obtained by combining the second frequency band, the frequency band 3-1, and the frequency band 3-2 is used as the third frequency band.

For example, a base station with a system bandwidth of 1.25 MHz transmits a synchronization channel A using the second frequency band with a bandwidth of 1.25 MHz.

Meanwhile, a base station with a system bandwidth greater than 1.25 MHz transmits the synchronization channel A using the second frequency band, and also transmits synchronization channels B and C using frequency bands that are within a 5 MHz frequency band including the center frequency on a raster of the first frequency band but are different from the second frequency band (i.e., the frequency bands 3-1 and 3-2). In this case, the bandwidth of the third frequency band is 5 MHz.

The mobile station performs an initial cell search based on an assumption that the synchronization channel A is transmitted in the second frequency band of 1.25 MHz including the central frequency on a raster of the first frequency band. This method eliminates the need for a mobile station to determine the frequency band used for a synchronization channel. In other words, this method makes it possible to reduce the workload of a mobile station in an initial cell search and thereby enables a fast cell search.

For example, the mobile station detects a frequency band of 1.25 MHz including the center frequency of a 20 MHz spectrum. Even when both the base station and the mobile station use a 20 MHz frequency band, this method enables the mobile station to easily detect the 1.25 MHz frequency band including the center frequency of the 20 MHz frequency band to perform an initial cell search.

Meanwhile, when performing a neighboring cell search during the standby mode or during communications, the mobile station can obtain bandwidth information of neighboring cells from a broadcast channel (BCH) of a serving cell. For example, when the mobile station is in a cell covered by a base station with a system bandwidth of 1.25 MHz, the mobile station can perform a neighboring cell search using a synchronization channel transmitted with a 1.25 MHz frequency band. Also, when the mobile station is in a cell covered by a base station with a system bandwidth of 5 MHz or greater, the mobile station can perform a neighboring cell search using synchronization channels transmitted with a 5 MHz frequency band (i.e., the third frequency band).

A synchronization channel includes, in addition to timing information, a cell ID group (or a cell ID), bandwidth information, and/or the number of transmitting antennas of the base station. To enable a mobile station to obtain information necessary to perform an initial cell search, the base station transmits, by using the second frequency band, a synchronization channel including timing information and at least one of the following control information items: a cell ID group, bandwidth information, and the number of transmitting antennas.

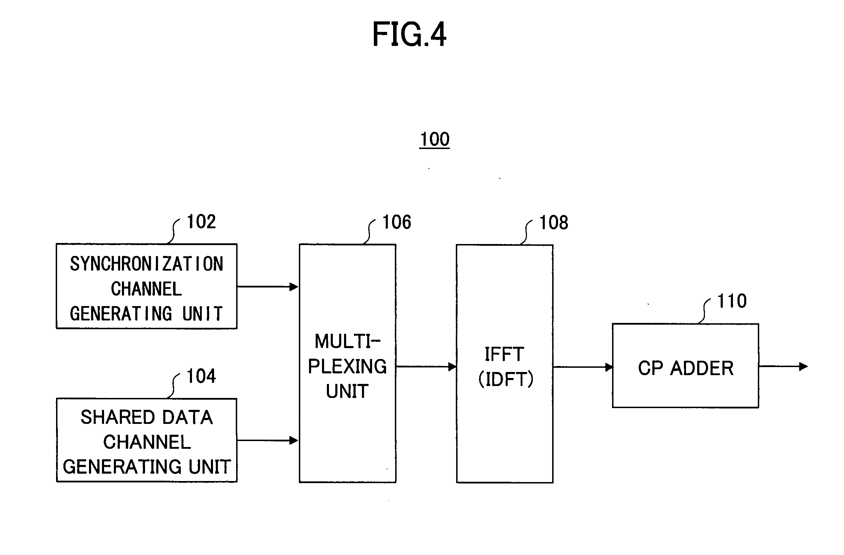

Next, a transmitting device of this embodiment is described with reference to FIG. 4. The transmitting device is provided, for example, in a base station.

A base station 100 includes a synchronization channel generating unit 102, a shared data channel generating unit 104, a multiplexing unit 106, an inverse Fourier transform unit 108, and a CP adder 110.

The synchronization channel generating unit 102 generates a synchronization channel (SCH) used by the mobile station to perform an initial cell search or a neighboring cell search. For example, the synchronization channel generating unit 102 generates a synchronization channel including timing information.

As described above, there are two types of synchronization channels: a primary synchronization channel (P-SCH) and a secondary synchronization channel (S-SCH). The P-SCH is used by the mobile station to detect a slot timing. The S-SCH is used by the mobile station to detect a frame timing and a scrambling code group. The synchronization channel generating unit 102 may also be configured to generate a synchronization channel including, in addition to the timing information, a cell ID group (or a cell ID), bandwidth information, and the number of transmitting antennas of the base station. In this case, the mobile station can also obtain information necessary to perform an initial cell search from the synchronization channel.

The multiplexing unit 106 multiplexes one or more synchronization channels generated by the synchronization channel generating unit 102 and a shared data channel generated by the shared data channel generating unit 104.

For example, for a mobile station performing an initial cell search, the multiplexing unit 106 multiplexes a synchronization channel in the second frequency band. Also, for a mobile station performing a neighboring cell search, the multiplexing unit 106 multiplexes synchronization channels in the third frequency band having a bandwidth greater than that of the second frequency band. Specifically, as shown in FIG. 3, the multiplexing unit 106 multiplexes the synchronization channel A in the second frequency band, and multiplexes the synchronization channels B and C in frequency bands that are within the third frequency band including the center frequency on a raster of the first frequency band but are different from the second frequency band (i.e., the frequency bands 3-1 and 3-2). In this case, the synchronization channel A includes information necessary for an initial cell search. For example, the synchronization channel A includes timing information and at least one of the following control information items: a cell ID group (or a cell ID), bandwidth information, and the number of transmitting antennas of the base station.

The same control information as in the synchronization channel A may also be transmitted by the synchronization channels B and C. In other words, the same control information may be transmitted redundantly by the synchronization channels A, B and C. With this configuration, a mobile station performing a neighboring cell search using a 5 MHz frequency band can improve the reception quality of a synchronization channel based on the redundancy. The synchronization channels A, B, and C reporting the same control information may be represented by different signal sequences.

The inverse Fourier transform unit (IFFT) 108 transforms the multiplexed channel into an orthogonal multicarrier signal. The CP adder 110 inserts a cyclic prefix (CP) into the multicarrier signal.

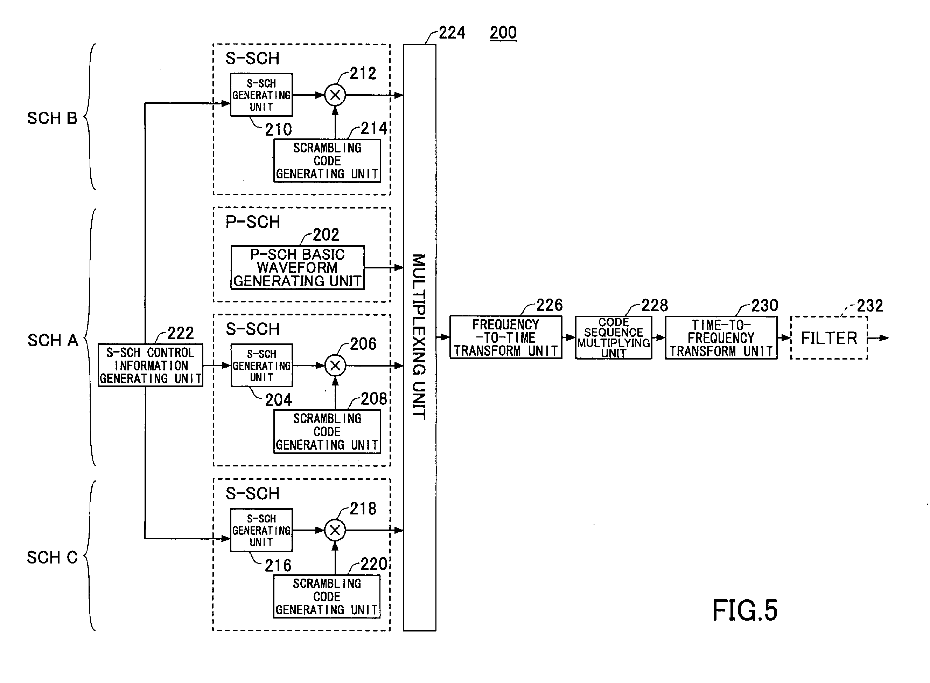

Next, a synchronization channel generating unit 200 of the base station 100 according to an embodiment of the present invention is described with reference to FIG. 5.

The synchronization channel generating unit 200 includes a P-SCH basic waveform generating unit 202, S-SCH generating units 204, 210, and 216, scrambling code generating units 208, 214, and 220, scrambling code multiplying units 206, 212, and 218, an S-SCH control information generating unit 222, a multiplexing unit 224, a frequency-to-time transform unit 226, a code sequence multiplying unit 228, a time-to-frequency transform unit 230, and a filter 232. The filter 232 may be omitted from the synchronization channel generating unit 200 as described later. Also, the frequency-to-time transform unit 226, the code sequence multiplying unit 228, the time-to-frequency transform unit 230, and the filter 232 may be chosen arbitrarily.

The P-SCH basic waveform generating unit 202 generates information used by the mobile station to detect a slot timing by using a signal mapped to every Nth subcarrier in the frequency domain as a basic waveform. For example, the P-SCH basic waveform generating unit 202 generates a P-SCH used for timing detection by using a signal mapped to every Nth subcarrier in the frequency domain as a basic waveform. This signal is, for example, generated using a code, such as a constant amplitude zero autocorrelation (CAZAC) sequence, that has a constant amplitude in the frequency domain.

The S-SCH control information generating unit 222 generates S-SCH control information used by the mobile station to detect a frame timing and a scrambling code group and inputs the S-SCH control information to the S-SCH generating units 204, 210, and 216. For example, the S-SCH control information generating unit 222 generates cell-specific control information.

The S-SCH generating units 204, 210, and 216, respectively, generate S-SCHs based on the S-SCH control information. The scrambling code multiplying units 206, 212, and 218 multiply, as needed, the generated S-SCHs by scrambling codes generated by the scrambling code generating units 208, 214, and 220. Multiplying the S-SCHs by scrambling codes makes it possible to prevent occurrence of peaks in the time domain (i.e., makes it possible to reduce the peak-to-average power ratio (PAPR)).

The multiplexing unit 224 multiplexes the S-SCHs using all or a part of subcarriers, which have power close to zero, of a signal transformed back into the frequency domain.

For example, the multiplexing unit 224 multiplexes the P-SCH used for timing detection and one of the S-SCHs for reporting the cell-specific control information in the second frequency band.

The multiplexing unit 224 also multiplexes the other S-SCHs for reporting the cell-specific control information in frequency bands that are within the third frequency band but are different from the second frequency band (i.e., the frequency bands 3-1 and 3-2).

Alternatively, the multiplexing unit 224 may be configured to multiplex P-SCHs used for timing detection in frequency bands that are within the third frequency band but are different from the second frequency band. This configuration makes it possible to improve the accuracy of timing detection by using the P-SCHs transmitted using frequency bands that are within the third frequency band but are different from the second frequency band.

In this case, transmission power levels of subcarriers may become uneven. However, this does not cause any problem as long as the transmission power of the entire frequency band is constant. In this embodiment, P-SCHs and S-SCHs are frequency-division-multiplexed. Alternatively, P-SCHs and S-SCHs may be code-division-multiplexed or time-division-multiplexed.

The frequency-to-time transform unit 226 inverse-Fourier-transforms the signal generated by the P-SCH basic waveform generating unit 202 and thereby transforms the signal into the time domain. The signal transformed by the frequency-to-time transform unit 226 has a N-cycle waveform.

The code sequence multiplying unit 228 multiplies the signal transformed by the frequency-to-time transform unit 226 into the time domain by a code sequence such as a CAZAC sequence. Alternatively, the code sequence multiplying unit 228 may be configured to perform sign inversion on the signal transformed into the time domain. Multiplying or inverting the signal enables the mobile station to obtain replica correlation of the P-SCH and thereby makes it possible to reduce the workload of the mobile station. Also, multiplying or inverting the signal improves autocorrelation characteristics of the P-SCH in the time domain (causes the P-SCH to show sharp peaks).

The time-to-frequency conversion unit 230 Fourier-transforms the signal multiplied by a code sequence at the code sequence multiplying unit 228 and thereby transforms the signal back into the frequency domain. After being transformed back into the frequency domain, the signal is mapped mostly to every Nth subcarrier. Also, as a result of multiplication or inversion, the signal includes out-of-band components. The out-of-band components may be removed using the filter 232. Removing the out-of-band components by the filter 232 makes it possible to reduce influence of the signal on channels in other frequency bands (although this may distort the SCH signal). Alternatively, the out-of-band components may be left in the signal because the influence of the out-of-band components on other channels is small. In this case, distortion of the SCH signal is prevented.

Although specific values are used in the above descriptions to facilitate the understanding of the present invention, the values are just examples and different values may also be used unless otherwise mentioned.

Although functional block diagrams are used to describe devices in the above embodiments, those devices may be implemented by hardware, software, or a combination of them. The present invention is not limited to the specifically disclosed embodiments, and variations and modifications may be made without departing from the scope of the present invention.

The present international application claims priority from Japanese Patent Application No. 2006-169454 filed on June 19, 2006, the entire contents of which are hereby incorporated herein by reference.

### INDUSTRIAL APPLICABILITY

A base station according to embodiments of the present invention may be applied to a wireless communication system.

## Claims

1. A base station communicating with mobile stations by using a frequency band within a transmission band based on orthogonal frequency division multiplexing, the base station comprising:
a multiplexing unit configured to multiplex a synchronization channel, for a mobile station performing an initial cell search, in a second frequency band including a center frequency on a raster of a first frequency band and having a bandwidth corresponding to the smallest one of receivable bandwidths of the mobile stations in a system,
wherein the multiplexing unit is configured to multiplex multiple synchronization channels, for a mobile station performing a neighboring cell search, in a third frequency band including the center frequency on the raster of the first frequency band and having a bandwidth that is greater than that of the second frequency band.

2. The base station as claimed in claim 1, wherein the bandwidth of the first frequency band is a transmission bandwidth of the base station.

3. The base station as claimed in claim 1, wherein the multiplexing unit is configured to multiplex, in the second frequency band, a synchronization channel including timing information and at least one of a cell ID group, bandwidth information, and the number of transmitting antennas.

4. The base station as claimed in claim 3, wherein the multiplexing unit is configured to multiplex, in frequency bands that are within the third frequency band but are different from the second frequency band, synchronization channels each including the timing information and at least one of the cell ID group, the bandwidth information, and the number of transmitting antennas.

5. The base station as claimed in claim 1, wherein the multiplexing unit is configured to multiplex a P-SCH used for timing detection and an S-SCH for reporting cell-specific control information in the second frequency band.

6. The base station as claimed in claim 5, wherein the multiplexing unit is configured to also multiplex P-SCHs used for timing detection in frequency bands that are within the third frequency band but are different from the second frequency band.

7. The base station as claimed in claim 5, wherein the multiplexing unit is configured to also multiplex S-SCHs for reporting cell-specific control information in frequency bands that are within the third frequency band but are different from the second frequency band.
